# EUROPEAN PATENT SPECIFICATION

(11) **EP 4 081 856 B1**
(45) Date of publication and mention of the grant of the patent: **09.07.2025**
(21) Application number: 20905115.0
(22) Date of filing: 22.12.2020
(51) Int. Cl.: G02F 1/35, G02F 2/02, B82Y 20/00, F41G 1/32

(54) **A CONVERSION APPARATUS AND A SCREEN COMPRISING THEREOF**
KONVERTIERUNGSVORRICHTUNG UND SCHIRM DARAUS
APPAREIL DE CONVERSION ET ÉCRAN COMPRENANT CELUI-CI

(30) Priority: 25.12.2019 TR 201921481
(43) Date of publication of application: 02.11.2022
(73) Proprietor: Bilkent Universitesi (Unam) Ulusal Nanoteknoloji Arastirma Merkezi, 06800 Ankara (TR)
(72) Inventor: DEMIR, Hilmi Volkan, 06800 Ankara (TR); UNAL, Emre, 06800 Ankara (TR)
(74) Representative: Perronace, Andrea
(86) International application number: PCT/TR2020/051352
(87) International publication number: WO 2021/133344

(56) References cited:
- EP-A2- 2 260 342
- WO-A1-2017/130949
- FR-A1- 2 959 352
- US-A1- 2014 185 284
- US-A1- 2016 313 549

## Description

### Technical Field

The present invention relates to a conversion apparatus for converting an image output on screens from a visible wavelength range into an infrared wavelength range, and a screen comprising thereof.

### Background of the Invention

Scientists who carry out research and observations on astronomy usually perform study in dark areas and they need this darkness to be maintained until the end of their study. However, they are often in need of electronic devices for the data which are obtained during the studies being performed, and they have difficulty in their studies because of the lights emitting from these devices. Therefore, there is need for an apparatus which ensures that devices emitting light around in cases where darkness is required have an image that is like a dark surface externally but enables staff to see data by means of similar equipment such as night vision binoculars, and which makes it easier for scientists to complete their study without the need to emit any light around.

The United States patent document no. US2011013253**,** an application in the state of the art, discloses an integrated film which includes a plasmonic layer created by being patterned. This film has a feature of down shifting and up shifting the incoming wavelength. Because of this feature, the wavelength converting film can be used in night vision devices. However, the film included in the apparatus that we applied for does not have a plasmonic layer by being patterned. In addition, the apparatus provides the possibility to be used with night vision devices, not in night vision devices. US2016/313549A1 and US2014/185284A1 disclose similar conversion apparatuses.

### Summary of the Invention

An objective of the present invention is to realize a conversion apparatus which converts image output on screens from a visible wavelength range into an infrared wavelength range, and a screen comprising thereof.

Another objective of the present invention is to realize a conversion apparatus which prevents emission of light around by enclosing the light in the visible wavelength upon being inserted on screens in dark work environments and enables to see the image of the screen that is converted into an infrared wavelength by means of suitable equipment, and a screen comprising thereof.

### Detailed Description of the Invention

"A Conversion Apparatus and a Screen Comprising Thereof" realized to fulfil the objectives of the present invention is shown in the figures attached, in which:

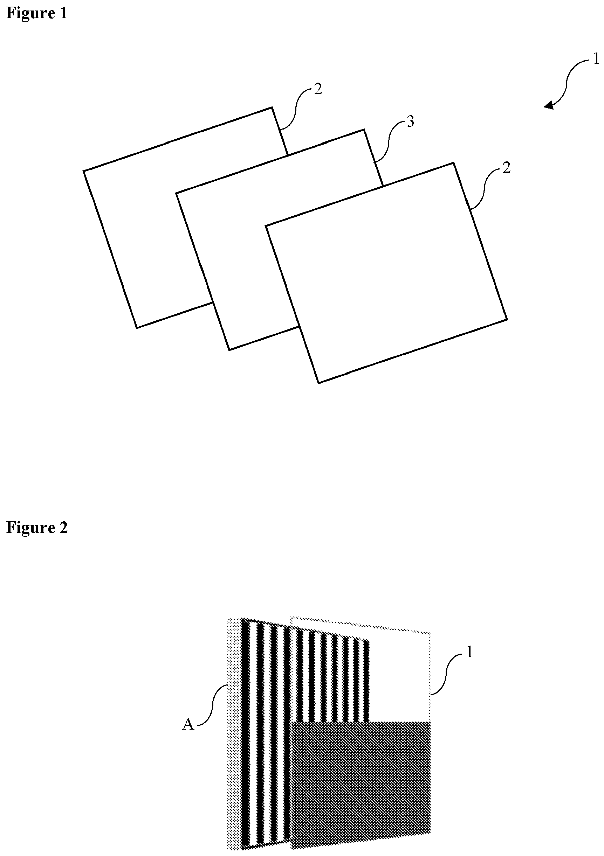

**Figure 1** is an exploded view of the inventive conversion apparatus.
**Figure 2** is a view of the inventive conversion apparatus in front of a screen with image output wherein vertical lines are included such that its upper part is cut.

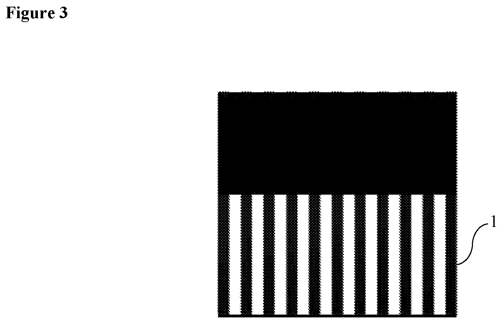

**Figure 3** is a view seen when the conversion apparatus placed in front of the inventive screen is viewed by IR night vision binoculars across.

The components illustrated in the figures are individually numbered, where the numbers refer to the following:
1. Conversion apparatus
2. Body
3. Film

### A: Screen

The objective has been achieved by the conversion apparatus for converting an image output on screens from a visible wavelength range into an infrared wavelength range comprising - at least one body; and -at least one film which is inserted into the at least one body and configured to convert the wavelength of the light in the visible wavelength range into the infrared wavelength range arriving on it, the at least one body is made of a high transparency PET-type material with folding characteristic; the at least one film comprises one or more nanoparticles for radiation in one or more different wavelength ranges by absorbing photons in visible wavelength, the at least one film is made of PbS core or PbS/CdS nanoparticles and acrylic-based polymers.

Further embodiments of the conversion apparatus according to the invention are subject-matter of the dependent claims.

The body (2) included in the conversion apparatus (1) of the preferred embodiment has a planar form has a planar form such that it will cover both surfaces of the film (3). In a preferred embodiment not forming part of the invention, the body (2) is made of a glass or transparent material. In the present invention, the body (2) is made of a high transparency PET-type material with folding characteristic. The body (2) is configured to be inserted onto a screen (A) having a monitor, an indicator or a signal light.

The film (3) included in the conversion apparatus (1) of the present invention comprises one or more nanoparticles for radiation in one or more different wavelength ranges by absorbing photons in visible wavelength. In the present invention, the film (3) is obtained by turning PbS core or PbS/CdS nanoparticles into a thin form like paper by using acrylic-based polymers.

The inventive conversion apparatus (1) enables the screen (A) to look dark when it is inserted onto the screen (A) displaying an image in a visible wavelength range, by enclosing the light. Besides, the conversion apparatus (1) converts an image exiting from the screen (A) -that is in a visible wavelength range- into an infrared wavelength range and then enables scientists studying on astronomy to see an image converted into an visible wavelength range, easily and to complete their studies comfortably by means of night vision binoculars although no light is emitted out from screens in dark working environments they need. The said conversion apparatus (1) can be placed in front of the screen (A), and it can be integrated to the screen (A) in software or by photo absorption as well.

In one embodiment of the invention, the conversion apparatus (1) integrated to the screen (A) in software ensures that part of adjacent pixels are aligned with the film (3) consecutively and fixed, upon the film (3) is patterned on monochrome monitor screens (A). Thereby, operation of a monitor can be ensured in an IR area by use of only aligned pixels in software or only in a visible area by use of only non-aligned pixels.

In another embodiment of the invention, the conversion apparatus (1) integrated to the screen (A) by photo absorption is realized by ensuring that the film (3) absorbs only the requested wavelengths. Due to the fact that one colour (a certain wavelength range) of two-coloured LED signal lamp passes through the film (3) without being absorbed, it is visible to the human eye at a visible wavelength whereas it is ensured that the other colour thereof (a certain wavelength range) is absorbed and then used upon being converted into an infrared wavelength.

In addition, the present invention also relates to a screen (A) comprising the above-stated conversion apparatus (1).

Within these basic concepts; it is possible to develop various embodiments of the inventive conversion apparatus (1); the invention cannot be limited to examples disclosed herein and it is essentially according to appended claims.

## Claims

1. A conversion apparatus (1) for converting an image output on screens (A) from a visible wavelength range into an infrared wavelength range comprising:
- at least one body (2); and
- at least one film (3) which is inserted into the at least one body (2) and configured to convert the wavelength of the light in the visible wavelength range into the infrared wavelength range arriving on it;
wherein
- the at least one body (2) is made of a high transparency PET-type material with folding characteristic;
the at least one film (3) comprises one or more nanoparticles for radiation in one or more different wavelength ranges by absorbing photons in visible wavelength;
- the at least one film (3) is made of PbS core or PbS/CdS nanoparticles and acrylic-based polymers.

2. A conversion apparatus (1) according to claim 1, **characterized by** the body (2) which has a planar form such that it will cover both surfaces of the film (3).

3. A conversion apparatus (1) according to any of the preceding claims, **characterized by** the body (2) which is configured to be inserted onto a screen (A) having a monitor, an indicator or a signal light.

4. A screen (A) comprising a conversion apparatus (1) according to any of the preceding apparatus claims.

## Patentansprüche

1. Konvertierungsvorrichtung (1) zum Konvertieren eines Bildes, das auf Bildschirmen (A) aus einem sichtbaren Wellenlängenbereich in einen Infrarot-Wellenlängenbereich ausgegeben wird, umfassend:
- mindestens einen Körper (2); und
- mindestens eine Folie (3), die in den mindestens einen Körper (2) eingesetzt ist und dazu konfiguriert ist,
die Wellenlänge des Lichts in dem sichtbaren Wellenlängenbereich in den Infrarot-Wellenlängenbereich zu konvertieren,
wobei der mindestens eine Körper (2) aus einem hochtransparenten PET-Material mit Falt-Eigenschaft besteht;
die mindestens eine Folie (3) ein oder mehrere Nanopartikel zur Strahlung in einem oder mehreren verschiedenen Wellenlängenbereichen durch Absorption von Photonen in sichtbarer Wellenlänge;
- die mindestens eine Folie (3) aus PbS-Kern- oder PbS/CdS-Nanopartikeln und auf Acryl basierenden Polymeren besteht.

2. Konvertierungsvorrichtung (1) nach Anspruch 1, **dadurch gekennzeichnet, dass** der Körper (2) eine flache Form aufweist, sodass er beide Oberflächen der Folie (3) abdecken wird.

3. Konvertierungsvorrichtung (1) nach einem der vorhergehenden Ansprüche, **dadurch gekennzeichnet, dass** der Körper (2) dazu konfiguriert ist, auf einen Bildschirm (A) aufweisend ein Monitor, einen Anzeiger oder ein Signallicht aufgesetzt zu werden.

4. Bildschirm (A), umfassend eine Konvertierungsvorrichtung (1) nach einem der vorhergehenden Vorrichtungsansprüche.

## Revendications

1. Appareil de conversion (1) pour convertir une image affichée sur des écrans (A) d'une plage de longueurs d'onde visible en une plage de longueurs d'onde infrarouge, comprenant :
- au moins un corps (2) ; et
- au moins un film (3) qui est inséré dans ledit au moins un corps (2) et configuré pour convertir
la longueur d'onde de la lumière dans la plage de longueurs d'onde visible en la plage de longueurs d'onde infrarouge arrivant sur celui-ci,
- ledit au moins un corps (2) étant constitué d'un matériau de type PET à haute transparence avec une caractéristique de pliage ;
l'au moins un film (3) comprend une ou plusieurs nanoparticules pour un rayonnement dans une ou plusieurs plages de longueurs d'onde différentes en absorbant des photons dans la longueur d'onde visible ;
- l'au moins un film (3) est constitué de nanoparticules à cœur de PbS ou PbS/CdS et de polymères à base d'acrylique.

2. Appareil de conversion (1) selon la revendication 1, **caractérisé par** le corps (2) qui présente une forme plane de manière à recouvrir les deux surfaces du film (3).

3. Appareil de conversion (1) selon l'une quelconque des revendications précédentes, **caractérisé par** le corps (2) qui est configuré pour être inséré sur un écran (A) comprenant un moniteur, un indicateur ou un témoin lumineux.

4. Écran (A) comprenant un appareil de conversion (1) selon l'une quelconque des revendications d'appareil précédentes.
